**Europäisches Patentamt**

**European Patent Office**

**Office européen des brevets**

(19)

(11) Publication number: **0 119 014**
**A2**

(12) # EUROPEAN PATENT APPLICATION

(21) Application number: **84300901.0**

(22) Date of filing: **13.02.84**

(51) Int. Cl.³: **B 01 D 17/02**

(30) Priority: **14.02.83 US 466148**

(43) Date of publication of application:
**19.09.84 Bulletin 84/38**

(84) Designated Contracting States:
**BE DE FR GB IT NL**

(71) Applicant: **Anderson, Edward Marshall**
**2620 East Medicine Lake Boulevard**
**Minneapolis Minnesota 55441(US)**

(72) Inventor: **Anderson, Edward Marshall**
**2620 East Medicine Lake Boulevard**
**Minneapolis Minnesota 55441(US)**

(74) Representative: **Thomson, Roger Bruce**
**POLLAK MERCER & TENCH High Holborn House 52-54**
**High Holborn**
**London WC1V 6RY(GB)**

(54) **Apparatus and method for physically separating a mixture of two or more liquids.**

(57) Apparatus for physically separating a mixture of a first least dense liquid, a second more dense liquid, and a third most dense liquid comprises an upright container (12) with a liquid inlet (14), a bottom outlet (17) adjacent to the bottom (22) with a flow control valve (25), a bottom float (33) in the container but above the bottom outlet (17), a lower outlet (16) above the bottom float (33) with a flow control valve (24), a low float (28) above the lower outlet (16) and operatively connected to the lower outlet control valve (24), a middle float (30) above the low float (28), an upper outlet (18) above the middle float (30), and a high float (32) adjacent to or above the upper outlet (18). The bottom, low and middle floats (33,28,30) are connected in parallel, with the low float (28) connected to the lower outlet valve (24); the middle and high floats (30,32) are connected in series to the upper outlet valve (26); and the bottom float (33) is connected to the bottom outlet valve (25). The low and middle floats (28,30) are fillable and sink in the least dense liquid and rise in the more dense liquid; the bottom float (32) is filled or ballasted to sink in the least and more dense liquids and to rise in the most dense liquid; the high float (32) is air filled and rises in all three liquids. The separation may be carried out either under pressure or at atmospheric pressure. It is particularly appropriate for the separation of a mixture of oil, water and creosote.

./..

FIG.1

- 1 -

## APPARATUS AND METHOD FOR PHYSICALLY SEPARATING A MIXTURE OF TWO OR MORE LIQUIDS

This invention relates to apparatus for and a method of physically separating a mixture of two or more different liquids of least, greater and greatest specific gravities, for example, a mixture of oil, water and creosote.

The prior art separators have featured a two float control for separating two liquids, specifically one float for a lower outlet for water and a second float for an upper outlet for oil. Specific examples of this prior art are U.S. patents 2,315,017 and 4,055,499. These prior art devices also do not perceive the need for delaying the opening of the upper or lower outlet by sensing the stratification level between their floats.

It is an object of the present invention to provide an improved apparatus for separating a mixture of two or more different liquids.

It is an object of the present invention to provide an improved apparatus having physically separate but electrically interconnected floats for opening valves and separating a mixture of two or more different liquids.

It is an object of the present invention to provide an improved method of separating a mixture of two or more different liquids.

In accordance with the present invention, apparatus for separating a mixture of a first least dense liquid from a second and more dense liquid, and possibly a third and most dense liquid, has an upright settling container with an inlet for the mixture of liquids, an upper outlet under the control of a float for passing least dense liquid, a lower outlet under the control of a lower float for passing more dense liquid, and preferably a bottom outlet under the control of a bottom float for passing the most dense liquid; the upper float has a specific gravity less than any of the liquids, the lower float has a specific gravity between the specific gravities of the least and more dense liquids, and the bottom float has a specific gravity between the specific gravities of the more and most dense liquids.

In accordance with the invention there is provided apparatus for physically separating a mixture of two liquids, a first of the liquids being less dense than a second and more dense liquid, said apparatus being characterised by:

a)      an upright liquid container;

b)      a liquid inlet into the container for the introduction of the mixture into the container;

c)      a lower liquid outlet from the container for passing the more dense liquid from the container;

d)      a low float in the container at an elevational level above the level of the lower outlet;

e)      a valve in said lower outlet and operatively connected to said low float for controlling flow through said lower outlet;

f)      an upper liquid outlet from the container, said upper outlet being at an elevational level above the elevational level of the low float;

g)  a second float in the container at an elevational level between the low float and the upper liquid outlet, said low and second floats having a similar specific gravity which is more dense then the first liquid but less dense then the second liquid; and

h)  a valve in said upper outlet and operatively connected to said second float for controlling flow only through said upper outlet and being independent of flow control in the lower outlet, said second float and upper outlet flow control valve being connected in parallel with said low float and said lower outlet flow control valve.

Preferably, the apparatus is used for physically separating a mixture of three liquids, the third liquid being more dense then the second liquid, further characterised by:

a)  a bottom outlet adjacent to a bottom of the container, said bottom outlet housing a valve for controlling flow therethrough, and

b)  a bottom float at a level between the lower outlet and the bottom outlet, said bottom float being operatively connected to open the bottom outlet valve and having a specific gravity greater than that of the second liquid and less than that of the third liquid.

Also in accordance with the invention there is provided a method of separating a mixture of a first and less dense liquid from a second and more dense liquid, comprising the steps of

a)  ballasting a pair of floats to a specific gravity which is between the specific gravities of the less and more dense liquids;

b)    immersing the floats in the mixture;

c)    opening a lower outlet in response to the raising of the lower ballasted float by a rising level of the more dense liquid and normally closing the lower outlet in the absence of a predetermined level of the more dense liquid;

d)    following upwardly a stratification level between the less and more·dense liquids with the second, higher, independent ballasted float;

e)    de-energising a normally energised upper float which is energised by the presence of either less or more dense liquid upon the rising of the second ballasted float; and

f)    closing an upper outlet for less dense liquid when both the upper float and the second ballasted float are raised.

The method may also include separation of a third and most dense liquid, comprising the further steps of:

a)    ballasting a bottom float to a specific gravity between the specific gravities of the more dense and most dense liquids;

b)    immersing the bottom float in the mixture;

c)    following a bottom stratification level between the more dense and the most dense liquids with the bottom float; and

d)    opening a bottom outlet below the bottom float when the bottom stratification level rises to a predetermined height, and closing the bottom outlet when the bottom stratification level falls to or below a lesser predetermined height.

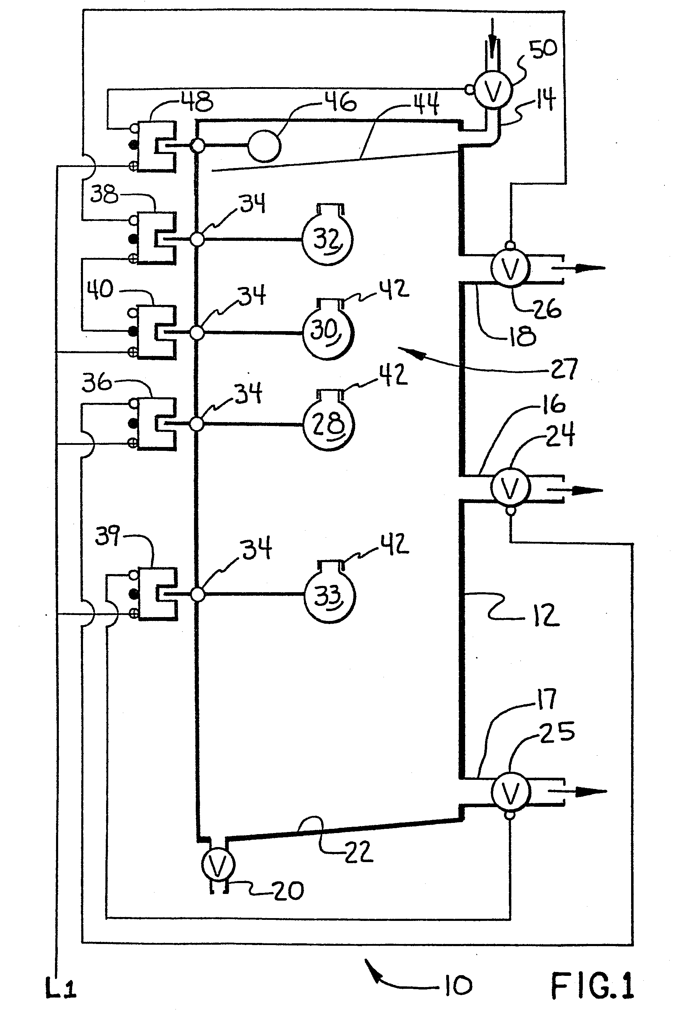

In order that the invention may be fully understood, a preferred embodiment will now be described in detail by way of example and with reference to the drawing which is a schematic elevational side view of apparatus for separating a mixture of two or more liquids, the apparatus being shown empty and with the electrical wiring.

The principles of the present invention are particularly useful when embodied in an apparatus for separating a mixture of three liquids of different density, such as the apparatus shown in the drawing and generally referred to by the numeral 10. The apparatus 10 is ideally suited for separating two or three liquids, such as petroleum and water, or petroleum, water and creosote.

The apparatus 10 comprises an upright liquid container 12 having a liquid inlet 14, a lower liquid outlet 16, a bottom outlet 17, an upper liquid outlet 18, and a drain outlet 20 from the container bottom 22. A normally closed valve 24 is provided in the lower outlet 16 for controlling flow therethrough, a similar normally closed valve 26 is provided in the upper outlet 18 for controlling flow therethrough, and a similar normally closed valve 25 is provided in the bottom outlet 17 for controlling flow therethrough. The valves 24, 25, 26 are independent and are not operatively connected to each other.

An upper group 27 of floats is provided within the container 12, specifically an upper group including a low float 28 at an elevational level above the level of the lower outlet 16 and the bottom outlet 17, a middle float 30 at an elevational level between the low float 28 and the upper outlet 18, and a high float 32 at a level adjacent to or above the level of the upper outlet 18. Below the upper group 27 of floats and below the low float 28 is a bottom float 33. Each of the floats 28, 30, 32, 33 extends through the wall of the container 12 and is pivotally mounted on a fulcrum 34.
The middle float 30 is essentially an upper stratification float and it follows up and down an upper stratification level between the least dense liquid and a more dense liquid in the apparatus 10.   The bottom float 33 is essentially a bottom stratification float and it follows up and down a bottom  stratification level between the most dense liquid and a less dense liquid in the apparatus 10.

The low float 28 is associated with a normally open switch 36 that is operatively connected to the lower outlet valve 24.   The high float 32 likewise is associated with a normally open switch 38 connected to the upper outlet valve 26.   The middle float 30 is associated with a normally closed switch 40 which is connected between a power line L1 and the high float switch 38. The middle float switch 40 and low float switch 36 are connected in parallel to the power line L1.

The bottom float 33 is associated with a normally open switch 39 connected to the bottom outlet valve 25.   The bottom float switch 39 is connected to power line L1 in parallel with the low float switch 36 and middle float switch 40.

The low, middle, high and bottom floats 28, 30, 32, 33 are each independently mounted in the container 12 and they are each operable completely independently of each other.   All the floats 28, 30, 32, 33 are hollow. The low float 28, middle float 30 and bottom float 33 each may have a removable fluid-tight sealing cap 42. The low float 28 and middle float 30 are filled with the least dense liquid, which gives these floats 28, 30 a specific gravity which is similar to and which is slightly more dense than the least dense liquid, but less dense than the more dense liquid.   The high float 32 is air-filled and is of less density than any least dense liquid to be separated.

The bottom float 33 is either filled with the most dense liquid or is ballasted to have a specific gravity greater than the more dense liquid but less than the most dense liquid.

At the top of the container 12 and above the float group 27 and the high float 32 is a generally horizontal plate baffle 44 to smooth out and laminate the incoming flow of liquid.  An overflow float 46 has a normally closed overflow switch 48 which is connected to power line L1 and to an inlet valve 50.  If and when incoming liquid backs up on the baffle 44, the overflow float 46 rises and the switch 48 opens  and the inlet valve 50 closes and terminates the incoming flow of liquid. Both the overflow switch 48 and the inlet valve may be of a graduated type for adjustable flow control.  The overflow switch 48 is connected to power line L1 in parallel with the bottom float switch 39, low float switch 36 and middle float switch 40.

In carrying out the method of the present invention, a mixture of two or three liquids of different densities is admitted into the container 12 through the inlet 14.  The most dense liquid may be creosote, the more dense liquid is usually water, and the least dense liquid is usually a petroleum such as crude, fuel oil, diesel, gasoline, and the like.  The low float 28 and middle float 30 are filled with the anticipated least dense liquid.

The bottom float 33 is filled with the anticipated most dense liquid or alternatively is ballasted to a specific gravity which is greater than the more dense liquid.  For example, if the more dense liquid is anticipated to be water, then the bottom float 33 may be set to have a specific gravity of 1.02.

Alternatively, the floats 28, 30, 33 may be preweighted to a predetermined specific gravity and be adjustable; several well-known structures such as counter-weights are known for this purpose.

With the apparatus 10 as shown, i.e. normally empty, the floats 28, 30, 32, 33 are all "down" and all three outlet valves 24, 25, 26 are closed.

When the apparatus 10 is filled with the least dense liquid, for example oil, the low, middle and bottom floats 28, 30, 33 remain "down" and the high float 32 rises and closes switch 38, opening the upper outlet valve 26 and allowing the least dense liquid to flow out of the upper outlet 18.

When the more dense liquid, for example water, begins to accumulate in the lower part of the apparatus 10, the low float 28 and bottom float 33 remain "down" even when the level of the more dense liquid is above the lower outlet 16.   This gives the accumulated more dense liquid (water) time to coalesce and minimises the probability of the least dense liquid (oil) going out of the lower outlet 16.

When the level of the more dense liquid rises above the low float 28, the low float 28 rises and closes switch 36 and thereby opens the lower outlet valve 24, so that the more dense liquid (water) flows out of the lower outlet 16.

As the level of the more dense liquid rises, the middle float 30 rises and opens switch 40 which thereby de-energises the high float switch 38.   If the high float 32 is raised by liquid of any density, this effectively closes the upper outlet valve 26 and terminates outlet flow of the least dense liquid.   The lower outlet valve 24 remains open and outlet flow of the more dense liquid continues until the level of the more dense liquid falls and retreats from the upper outlet 18.   As the level of the more dense liquid falls, the middle float 30 also falls, and when switch 40 recloses the upper outlet valve 26 will re-open provided that the high float 32 is raised by the presence of least dense liquid. The upper outlet valve 26 is closed when either of the high float 32 or middle float 30 is lowered.

If and when most dense liquid is introduced into the apparatus 10, it settles by gravity to the bottom 22. As the quantity of most dense liquid increases, its level will move upwards and cover the closed bottom outlet 17 and eventually reach the bottom float 33. When the bottom float 33 is lifted by a rising level of most dense liquid, the normally-open bottom float switch 39 is closed and the bottom outlet valve 25 is opened to allow flow of the most dense liquid out of the bottom outlet 17. When the level of the most dense liquid falls, the bottom float 33 also falls and the bottom float switch 39 re-opens and the bottom outlet valve 25 closes. The lower outlet 16 is positioned at an elevational level which is closer to the level of the low float 28 than to the level of the bottom float 33, and the bottom float 33 is at a level closer to the level of the lower outlet 16 than to the level of the bottom outlet 17. The vertical spacing between the bottom outlet 17 and the lower outlet 16 is greater than the vertical spacing between the lower outlet 16 and the upper outlet 18.

This apparatus and method have several unique advantages. All three outlets 16, 17, 18 can be concurrently open. As the stratification level between a more dense and the least dense liquids approaches the lower outlet 16, the lower outlet valve 24 is closed. As this stratification level approaches the upper outlet 18, the upper outlet valve 26 closes. The height of the container 12 and the spacing between the floats 28, 30,32 determines the range and sensitivity of the opening and closing of the upper outlet valve 26 and lower outlet valve 24.　The apparatus 10 lends itself to gravity flow with no pressure, or to full pressurisation; a given apparatus 10 may work with either gravity or pressure.

The apparatus 10 can also be used for reclaiming mixtures of cooking oils and shortening that are physically discrete from one another.　The more dense liquid need not be water; it could be a fuel oil, or a solvent. The apparatus 10 is also thought to be useful for the separation of PENTA type wool preservatives and carbon tetrachloride.

In a test of the apparatus 10, the container was sized at 800 gallons (US) capacity (3027 dm$^3$) and used to clean a two acre (0.8 hectare) settling pond in a railroad yard.　The pond was about 4½ feet (1.37 metres) deep and filled with a mixture of #5 oil, water, creosote and sludge.　In seven days, the apparatus 10 extracted 64,000 gallons (US) (242,260 dm$^3$) of re-usable creosote containing less than 3% water.

- 11 -

0119014

CLAIMS:

1. Apparatus for physically separating a mixture of two liquids, a first of the liquids being less dense than a second and more dense liquid, said apparatus being characterised by:

a) an upright liquid container (12);

b) a liquid inlet (14) into the container (12) for the introduction of the mixture into the container (12);

c) a lower liquid outlet (16) from the container (12) for passing the more dense liquid from the container (12);

d) a low float (28) in the container (12) at an elevational level above the level of the lower outlet (16);

e) a valve (24) in said lower outlet and operatively connected to said low float (28) for controlling flow through said lower outlet (16);

f) an upper liquid outlet (18) from the container, said upper outlet being at an elevational level above the elevational level of the low float (28);

g) a second float (30) in the container (12) at an elevational level between the low float (28) and the upper liquid outlet (18), said low and second floats (28,30) having a similar specific gravity which is more dense than the first liquid but less dense than the second liquid; and

h) a valve (26) in said upper outlet (28) and operatively connected to said second float (30) for controlling flow only through said upper outlet (18) and being independent of flow control in the lower outlet (16), said second float (30) and upper outlet flow control valve (26) being connected in parallel with said low float (28) and said lower outlet flow control valve (24).

2. Apparatus according to claim 1, characterised by a high float (32) in the container (12) at an elevational level above the level of the upper liquid outlet (26), said high float (32) being connected in series between the second float (30) and the upper liquid outlet flow control valve (26); wherein the low, second and high floats (28, 30, 32) are operable completely independently of each other.

3. Apparatus according to claim 2, characterised in that the second float (30) includes a normally closed switch (40) and the high float (32) includes a normally open switch (38), said float switches (40, 38) being electrically  connected to be normally closed and normally open respectively and then being connected to the upper outlet flow control valve (26).

4. Apparatus according to claim 1, 2 or 3, characterised in that said low and second floats (28, 30) are hollow and are fillable with the first, less dense liquid, said floats (28, 30) each having a fluid-tight sealing means (42) for sealing the less dense liquid therein.

5. Apparatus according to claim 2 or 3, characterised in that the low and second floats (28, 30) each have means (42) for being filled with the less dense liquid, and in that the high float (32) is filled with air.

6. Apparatus according to claim 1 for physically separating a mixture of three liquids, the third liquid being more dense than the second liquid, further characterised by:

a)      a bottom outlet (17) adjacent to a bottom (22) of the container (12), said bottom outlet (17) housing a valve (25) for controlling flow therethrough, and

b)      a bottom float (33) at a level between the lower outlet (16) and the bottom outlet (17), said bottom float (33) being operatively connected to open the bottom outlet valve (25) and having a specific gravity greater than that of the second liquid and less than that of the third liquid.

7. Apparatus according to claim 6, characterised in that the low float (28), second float (30), and bottom float (33) are each operable completely independently of each other.

8. Apparatus according to claim 6, characterised in that the bottom float (33) is hollow and is fillable with the second liquid, said bottom float (33) having a fluid-tight sealing means (42) for sealing the second liquid therein.

9. Apparatus according to claim 8, characterised in that the low float (28) and second float (30) are filled with the first liquid, and the high float (32) is filled with air.

10. Apparatus according to any of claims 6, 7, 8 or 9, characterised in that the bottom float (33) and the low float (28) have electrical switches (39,36) connected in parallel, and the second float (30) has a switch (40) connected independently of either the bottom float switch (39) or the low float switch (36).

11. Apparatus according to any of claims 6, 7, 8 or 9, characterised in that the lower outlet (16) is at a level closer to the level of the low float (28) than to the level of the bottom float (33).

12. Apparatus according to any of claims 6, 7, 8 or 9, characterised in that the bottom float (33) has a normally open switch (39) connected to the bottom outlet valve (25).

13. A method of separating a mixture of a first and less dense liquid from a second and more dense liquid, comprising the steps of:

a)    ballasting a pair of floats (28,30) to a specific gravity which is between the specific gravities of the less and more dense liquids;

b)    immersing the floats (28, 30) in the mixture;

c)    opening a lower outlet (16) in response to the raising of the lower ballasted float (28) by a rising level of the more dense liquid and normally closing the lower outlet (16) in the absence of a predetermined level of the more dense liquid;

d)    following upwardly a stratification level between the less and more dense liquids with the second, higher, independent ballasted float (30);

e)    de-energising a normally energised upper float (32) which is energised by the presence of either less or more dense liquid upon the rising of the second ballasted float (30); and

f)    closing an upper outlet (18) for less dense liquid when both the upper float and the second ballasted float (32, 30) are raised.

14.  A method according to claim 13, characterised by the further step of energising the upper float (32) and opening the upper outlet (18) when the second float (30) is lowered in response to a lowering of the level of the more dense liquid.

15.  A method according to claim 14, characterised by the further step of closing the upper liquid outlet (18) upon either the lowering of the upper float (32) or the raising of the second float (30).

16.  A method according to claim 13, including separation of a third and most dense liquid, comprising the further steps of:

a)    ballasting a bottom float (33) to a specific gravity between the specific gravities of the more dense and most dense liquids;

b)    immersing the bottom float (33) in the mixture;

c)      following a bottom stratification level between the more dense and the most dense liquids with the bottom float (33); and

d)      opening a bottom outlet (17) below the bottom float (33) when the bottom stratification level rises to a predetermined height, and closing the bottom outlet (17) when the bottom stratification level falls to or below a lesser predetermined height.         .

17.    A method according to claim 16, characterised by the further step of ballasting the bottom float (33) with the intended most dense liquid.

18.    A method according to claim 16, characterised by the further step of maintaining the bottom stratification level closer to the lower outlet (16) than to the bottom outlet (17).

19.    A method according to claim 16, 17 or 18, characterised in that the first liquid is a petroleum fuel, the second liquid is essentially water, and the third liquid is creosote.

0119014

1 / 1

FIG.1

L1

10